# EUROPÄISCHE PATENTANMELDUNG

(11) **EP 3 276 437 A1**
(43) Veröffentlichungstag der Anmeldung: **31.01.2018**
(21) Anmeldenummer: 16181412.4
(22) Anmeldetag: 27.07.2016
(51) Int. Cl.: G05B 19/042

(54) **VERFAHREN ZUM BETREIBEN EINES AUTOMATISIERUNGSSYSTEMS, BEDIEN- UND BEOBACHTUNGSSYSTEM UND AUTOMATISIERUNGSSYSTEM**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Verfahren zum Betreiben eines Automatisierungssystems einer technischen Anlage mit einem Bedien- und Beobachtungssystem mit zumindest einen Client (10) und zwei Server (81, 82,..8N). Das Verfahren sieht vor, dass zunächst eine erste Verbindung zwischen einem Client (10) und einem ersten Server (81) hergestellt wird, indem für einen an dem Client (10) angemeldeten Operator bei dem ersten Server (81) eine Überprüfung der Zugriffsrechte des Operators durch Auslesen der Zugriffsrechte aus einer Access-Control-Komponente (25) erfolgt, dass anschließend die Access-Control-Komponente (25) und zusätzlich eine Service-Configuration-Komponente (22) des ersten Servers (81) in den Client (10) geladen wird und dass dann mittels der Service-Configuration-Komponente (22) auf der Basis der Zugriffsrechte des Operators eine Evaluierung der Server stattfindet, wobei auch die Anzahl von Prozessobjekten pro Server bestimmt wird. In einem nächsten Schritt findet dann die Auswahl eines Vorzugsservers nach einem Kriterium eines Zustands des ausgewählten Servers und einem Kriterium einer auf dem Server vorhandenen maximalen Anzahl von Prozessobjekten der technischen Anlage statt. Erst dann wird zwischen dem Client (10) und dem zuvor bestimmten und überprüften Vorzugsserver (82) eine zweite Verbindung zum anschließenden Bedienen und Beobachten des technischen Prozesses hergestellt. Auf diese Weise wird eine dynamische und rechteorientierte Anmeldung von Clients bei den geeignetsten Servern im Kontext geringe Querkommunikation techn. Verfügbarkeit des Bedien- und Beobachtungssystems eines Automatisierungssystems erreicht, bei der die Querkommunikation zwischen den Servern minimal ist.

## Beschreibung

Die Erfindung betrifft ein Verfahren zum Betreiben eines Automatisierungssystems zum Steuern eines Prozesses in einer technischen Anlage, ein, in dem das Verfahren abläuft und ein Automatisierungssystem mit einem solchen Bedien- und Beobachtungssystem.

Die Automatisierungstechnik dient der Automatisierung von technischen Prozessen. Das automatisierte Gesamtsystem besteht aus einer technischen Anlage, in der ein Prozess abläuft, einem Automatisierungssystem mit einem Bedien- und Beobachtungssystem und Engineering-Systemen zum Planen und Abändern des Gesamtsystems. Das Automatisierungssystem mit seinen prozessnahen Komponenten und das Bedien- und Beobachtungssystem werden häufig auch als Prozessleitsystem bezeichnet. Bei dem automatisierten Prozess kann es sich beispielsweise um einen Verfahrens- oder fertigungstechnischen Prozess oder einen Prozess zur Erzeugung oder Verteilung elektrischer Energie handeln.

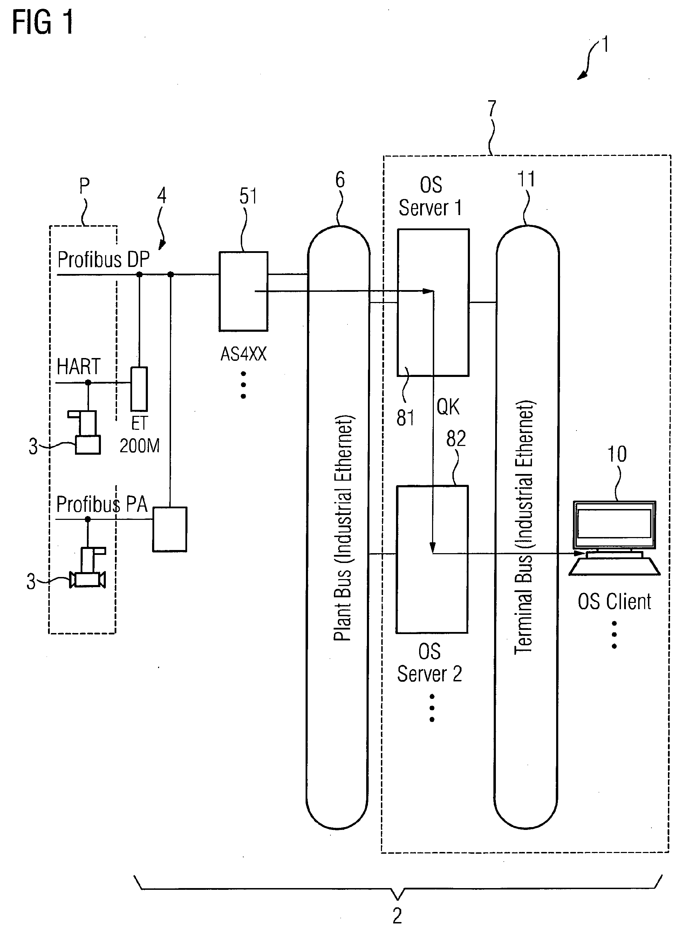

Ein Beispiel für den Aufbau eines automatisierten Gesamtsystems ist in Figur 1 dargestellt. In dem dargestellten Fall zeigt das Prozessleitsystem eine Serverarchitektur des bedien- und Beobachtungssystems (oder auch Operator-System genannt). Ein Vertreter dieser Architektur ist das Prozessleitsystem PCS7 von Siemens. Bei dieser Server-Client-Struktur kann der Operator oder Bediener der Anlage über den Client Rechner auf alle gewünschten Daten des Prozesses zugreifen. So sammeln die Operator Station Server (OS Server) zyklisch von allen prozessnahen Komponenten die Daten und stellt sie über den Terminalbus dem Operator Station Client (OS Client) zur Verfügung.

Auf die Server ist hierbei ein so genanntes Prozessabbild verteilt, in dem alle relevanten Prozessdaten der Prozessobjekte, die für das Bedienen und Beobachten relevant sind, teilanlagengranular bereitgestellt werden.

Gemäß der Technologischen Hierarchie kann jede technische Anlage nach technologischen Gesichtspunkten strukturiert werden. Dabei werden die Automatisierungs-, Bedien- und Beobachtungsfunktionen hierarchisch in vier Hierarchieebenen aufgeteilt: Anlagen, Teilanlagen, technische Einrichtungen und Einzelsteuereinheiten. Für das Beispiel einer Produktionsanlage als verfahrenstechnische Anlage, in der ein Zersetzungsprozess stattfindet, repräsentiert beispielsweise der Bereich, in dem die Edukte verarbeitet werden, eine Teilanlage. Ein Tank entspricht einer technischen Einrichtung, die Ventile und Füllstandsmesser mit den entsprechenden Reglern repräsentieren die Einzelsteuereinheiten. Die logische Hierarchie der Automatisierung des Zersetzungsprozesses wird demnach angelehnt an die beschriebene Verfahrenstechnik.

Die Technologische Hierarchie ermöglicht auch eine automatische Generierung der Bildhierarchie zum Bedienen und Beobachten. Dabei wird für jede der genannten Ebenen ein Bedienbild generiert. In diesem werden für alle in den Plänen dieser Ebene verwendeten Automatisierungsbausteine assoziierte Bediensymbole angelegt. Diese wiederum sind mit den Prozessobjekten des Prozessabbilds assoziiert. Prozessobjekte sind alle Bausteininstanzen, die bedien- und beobachtbar sind und auch die Eigenschaft besitzen, Meldungen zu generieren. Die Prozessobjekte werden zumeist grafisch dargestellt und sind zumeist als standardisierte Bausteine in Bibliotheken enthalten. Beim Engineering der Automatisierung einer technischen Anlage werden die Prozessobjekte mittels eines geeigneten Editors auf einer Projektierungsoberfläche nach technologischen Gesichtspunkten platziert und miteinander verschaltet.

Die eigentliche Bedienung und Beobachtung durch einen Operator erfolgt über die OS Clients, auf denen Anlagenbilder visualisiert werden und durch die Bausteininstanzen auf den OS Servern mit Prozessdaten dynamisiert werden. Unter dem Begriff der Dynamisierung ist hier z.B. die dynamische Visualisierung eines Füllstandes in Abhängigkeit von aktuellen Prozesswerten zu verstehen. Bestimmte, auf den Anlagenbildern dargestellte Prozesswerte sind demnach dynamische, also stets zeitlich angepasste, Werte (im Gegensatz zu anderen gleichbleibenden, statischen Werten).

Nach dem Stand der Technik (im Prozessvisualisierungssystem WinCC von Siemens) kann sich ein bestimmter Operator Station Client nur mit einem (zuvor zugewiesenen) Operator Station Server verbinden. Dieser Operator Station Server stellt hierbei dem Operator Station Client alle notwendigen Inhalte für das Bedienen und Beobachten bereit (Anlagenbilder, Prozessdaten, usw.). Liegen die vom Client benötigten Inhalte nicht lokal auf dem angemeldeten Server, werden diese durch den angemeldeten Operator Station Server von den anderen Operator Station Servern durch Querkommunikation bezogen.

Verbinden sich nun die Operator Station Clients ungünstigerweise genau mit den Operator Station Servern, die die benötigten Prozessdaten für das Bedienen und Beobachten nicht im lokalen Prozessabbild haben, so müssen diese zu Lasten des Querkommunikationsaufkommens von den dafür zuständigen Operator Station Servern geladen werden. Fig. 1 zeigt beispielhaft einen derartigen Fall, in dem ein OS Client Prozessdaten von einem Automatisierungsserver 5 bezieht, der nicht dem verbunden Operator Station Server OS Server 2 zugeordnet ist. Die dadurch entstehende Querkommunikation QK zwischen OS Server 1 und OS Server 2 (als Pfeil verdeutlicht) ist insofern problematisch, als dass sie die Kommunikationslast des Terminalbusses drastisch in die Höhe treibt - insbesondere, wenn viele Operator Station Clients "ungünstig" mit den Operator Station Servern verbunden sind. In der Netzwerktechnik gibt es zwar so genannte "Load Balancer", welche grundsätzlich die Kommunikation einer Client-Server-Struktur optimieren können. Diese können das beschriebene Problem jedoch nicht beheben, da hier die Kommunikation von mehreren abhängigen und kaskadierten Verbindungen zwischen Servern berücksichtigt werden muss und das auch noch in Abhängigkeit der Zugriffsrechte des angemeldeten Operators.

Der Erfindung liegt daher die Aufgabe zugrunde, ein Verfahren anzugeben, welches die Querkommunikation zwischen den Servern eines Bedien- und Beobachtungssystems verbessert - insbesondere dann, wenn so genannte weborientierte Zero Installation Operator Station Clients zum Einsatz kommen, die sich potentiell an jedem Operator Station Server anmelden können und keinerlei Information über die Hardwarekonfiguration des Automatisierungssystems besitzen. Es ist ferner eine weitere Aufgabe der Erfindung ein Bedien- und Beobachtungssystem zum Ablauf des Verfahrens und ein entsprechendes Automatisierungssystem anzugeben.

Diese Aufgabe wird bezüglich des Verfahrens durch die im Anspruch 1 angegebenen Schritte gelöst. Im Hinblick auf die Vorrichtungen wird die Aufgabe durch die Merkmale der Ansprüche 5 und 7 gelöst.

Das erfindungsgemäße Verfahren, welches in einem Bedien- und Beobachtungssystem eines Automatisierungssystems mit zumindest einen Client und einen Server ausführbar ist, sieht vor, dass zunächst eine erste Verbindung zwischen einem Client und einem ersten Server hergestellt wird, indem für einen an dem Client angemeldeten Operator bei dem ersten Server eine Überprüfung der Zugriffsrechte des Operators durch Auslesen der Zugriffsrechte aus einer Access-Control-Komponente erfolgt, dass anschließend die Access-Control-Komponente und zusätzlich eine Service-Configuration-Komponente des ersten Servers in den Client geladen wird und dass dann mittels der Service-Configuration-Komponente auf der Basis der Zugriffsrechte des Operators eine Evaluierung der Server stattfindet, wobei auch die Anzahl von Prozessobjekten pro Server bestimmt wird. In einem nächsten Schritt findet dann die Auswahl eines Vorzugsservers nach einem Kriterium eines Zustands des ausgewählten Servers und einem Kriterium einer auf dem Server vorhandenen maximalen Anzahl von Prozessobjekten der technischen Anlage statt. Erst dann wird zwischen dem Client und dem zuvor bestimmten und überprüften Vorzugsserver eine zweite Verbindung zum anschließenden Bedienen und Beobachten des technischen Prozesses hergestellt.

Der Vorteil des erfindungsgemäßen Verfahrens liegt darin, dass ein Client eines Bedien- und Beobachtungssystems, welcher zuvor immer einem bestimmten Server dieses Systems zugeordnet war, nun demjenigen Server zugeordnet werden kann, über den die Kommunikation zuverlässiger und leistungsfähiger läuft. Verbindungen zwischen Clients und Servern des Bedien- und Beobachtungssystems können dynamisch so gewählt werden, dass eine minimale Querkommunikation zwischen den Servern erreicht wird, um die Kommunikationslast zu verteilen. Damit werden Ausfälle von Servern des Bedien- und Beobachtungssystems aufgrund von Kommunikationsüberlastung vermieden und die Fehlertoleranz des gesamten Prozessleitsystems durch die Fähigkeit einer dynamischen Verbindungsverwaltung, die neben der Kommunikationsoptimierung auch die spezifischen Gesundheitszustände der Server bei der Auswahl von Vorzugsservern mit berücksichtigt, verbessert.

In einer Ausgestaltung der Erfindung ist vorgesehen, dass die Service-Configuration-Komponente derart ausgestaltet ist, dass sie eine Tabelle mit statischen Einträgen wie Angaben über zu steuernde Teilanlagen der technischen Anlage und Angaben über deren Prozessabbild auf den Servern und mit dynamischen Einträgen wie einem momentanen Zustand und/oder einer Betriebsart der Server umfasst. Dies erlaubt vorteilhaft eine verbesserte Übersicht über die Zuordnungen der die Prozessabbilder betreffenden Daten zu den entsprechenden Servern. Insbesondere die Eigenschaft, dass verschiedene Zuordnungen nicht statisch sind, sondern während des Betriebs des Automatisierungssystems verändert werden können, erlaubt eine optimierte Zuordnung von Clients zu Servern unter Berücksichtigung unterschiedlichster Aspekte wie der Zugriffsrechte des Operators, der Anzahl der Prozessobjekte pro Server, des Zustands oder der Auslastung der Server. Auf diese Weise wird der Betrieb des Automatisierungssystems optimiert.

In einer weiteren vorteilhaften Ausgestaltung der Erfindung werden die statischen Einträge der Tabelle der Server-Service-Configuration-Komponente während des Engineerings der Anlage festgelegt und die dynamischen Einträge während des Betriebs des Automatisierungssystems verändert. Die Möglichkeit, bestimmte Einträge bereits bei Inbetriebnahme der Anlage festzulegen, spart viel Aufwand und macht den Betrieb des Automatisierungssystems zuverlässiger. Die Möglichkeit, bestimmte Einträge während des Betriebs des Automatisierungssystems zu verändern, macht den Betrieb des Automatisierungssystems flexibler. Anpassungen welche dynamisch zur Laufzeit optimiert werden, erlauben somit die höchste Genauigkeit bei der Pflege der Einträge, was die Fehlertoleranz des Leitsystems enorm erhöht.

Weitere vorteilhafte Ausführungsvarianten der Erfindung sind weiteren Unteransprüchen zu entnehmen.

Im Folgenden wird die Erfindung sowie deren Ausgestaltungen anhand der Figuren, in denen ein Ausführungsbeispiel der Erfindung dargestellt ist, näher beschrieben und erläutert.

Es zeigen:
- Figur 1: eine Skizze einer technischen Anlage mit einem Automatisierungssystem zur Steuerung eines Prozesses,
- Figur 2: eine Softwarearchitektur zur Implementierung der dynamischen und rechteorientierten Anmeldung bei einem Bedien- und Beobachtungssystem, und
- Figur 3: ein Sequenzdiagramm zum Anmeldeprozess eines Clients an seinem Vorzugsserver

Figur 1 zeigt in vereinfachter schematischer Darstellung ein Beispiel für eine technische Anlage 1, in der ein Prozess abläuft und mittels eines Automatisierungssystems 2 gesteuert wird. Das Automatisierungssystem 2 weist eine Vielzahl von prozessnahen Komponenten (Feldgeräten) auf, die auf Feldebene, also im Prozess P, vorgegebene Mess-, Steuer- und Regelungsfunktionen wahrnehmen. Die Feldgeräte 3 tauschen über ein Kommunikationssystem 4 prozess-, funktions- und/oder geräterelevante Daten untereinander und mit den höher gelegenen Steuerungs- und Leitebenen aus. Bei dem Kommunikationssystem 4 handelt es sich in der Regel um ein Feldbussystem (Profibus), welches mit einer Vielzahl von Automatisierungsgeräten 51, 52, ...5N wie z.B. speicherprogrammierbaren Steuerungen (SPS) verbunden ist. Die Automatisierungsgeräte 51, 52, ...5N wiederum sind über ein weiteres Kommunikationssystem 6, dem Anlagenbus, welcher zumeist als Industrial Ethernet ausgeführt ist, mit einem übergeordneten Rechnersystem 7 verbunden. Dieses umfasst im vorliegenden Ausführungsbeispiel ein Bedien- und Beobachtungssystem, das aus einer Anzahl von Servern 81, 82, ...8N (hier als Operator Station Server bezeichnet, abgekürzt OS Server) und zumindest einem Client Rechner 10 (hier als Operator Station Client bezeichnet, abgekürzt OS Client) besteht. Der OS Client 10 tauscht über ein weiteres Bussystem 11, welches hier als Terminalbus bezeichnet wird, Informationen und Daten mit den OS-Servern 81, 82,...8N aus.

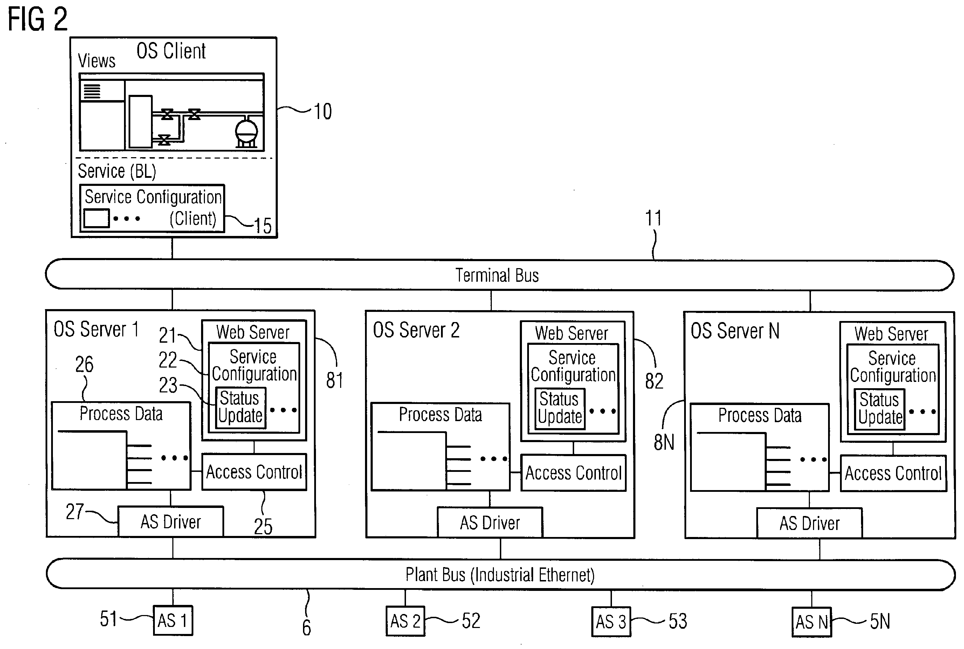

In Fig. 2 sind neben Teilen der soeben beschriebenen Hardware-Konfiguration des Automatisierungssystems auch die Software-Architektur zur Implementierung des erfindungsgemäßen Verfahrens in vereinfachter Form dargestellt.

Das dargestellte Ausführungsbeispiel beschränkt sich nur auf einen Client-Rechner. Es können auch mehrere Client-Rechner vorhanden sein. Der in Fig. 2 dargestellte OS Client 10 ist über den Terminalbus mit den OS-Servern OS Server 1 (81), OS Server 2 (82) bis OS Server N (8N) verbunden und stellt sozusagen das Endgerät des Netzwerks dar. Er umfasst Software-Mittel zur Bereitstellung der Kommunikation mit einem Server (wie bspw. einen Webbrowser), zur Abrufung von Diensten von dem Server und zur Visualisierung des in der technischen Anlage ablaufenden Prozesses. Dies erlaubt einem Operator unterschiedliche Sichten auf den technischen Prozess, je nach gewählter Anzeige. Die lokal auf den OS Servern liegenden Anlagenbilder stehen dem OS Client 10 für eine Visualisierung unmittelbar zur Verfügung. Mittels dieser Anzeigen kann der Operator die technische Anlage mittels des Automatisierungssystems bedienen, steuern und regeln.

In jedem OS Server sind Software-Bausteine oder Komponenten mit unterschiedlichen Funktionen zum Betreiben des Automatisierungssystems enthalten. So umfasst beispielsweise jeder OS Server 81, 82,...8N einen Webserver 21, über welchen die kommunikative Verbindung mit einem Webbrowser eines Clients hergestellt wird. Eine Access-Control-Komponente 25 enthält Daten und Befehle im Zusammenhang mit der Authentifizierung und Zugriffsberechtigungen eines Operators. Eine Process-Data-Komponente enthält Prozessdaten und in Software dargestellte Prozessobjekte wie Regler, Ventile oder andere verfahrenstechnische Objekte. Auch Driver-Komponenten 27 für die Kommunikation mit tiefer gelegenen Schichten des Automatisierungssystems sind Teil der OS-Server-Software-Architektur.

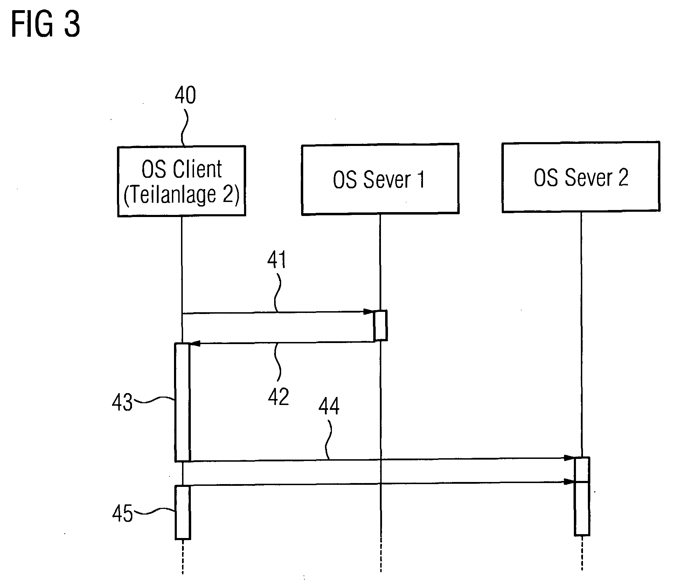

Gemäß der technologischen Hierarchie werden technische Anlagen u.a. auch in Teilanlagen aufgeteilt. Die Anlagenbilder für das Bedienen und Beobachten einer Teilanlage liegen auf dem oder den Teilanlagen zugeordneten OS-Server(n). Meldet sich ein Operator X mit einem OS-Client 10 an einer Anlage 1 an, verbindet sich dieser OS-Client 10 gemäß dieser Erfindung mit einem beliebigen Vorzugs-OS-Server (hier OS Server 2, 82, vgl. Fig. 3) der Anlage. Die lokal auf diesem Vorzugsserver liegenden Anlagenbilder stehen dem OS Client 10 für eine Visualisierung dann unmittelbar zur Verfügung.

Zur Erreichung einer optimierten Verbindung zwischen einem OS Client und OS Server ist in diesem Ausführungsbeispiel in den Web-Server 21 eines OS Servers 81, 82 ...8N die Server-Komponente Service-Configuration 22 integriert. "Optimierte Verbindung" bedeutet hierbei, dass die Querkommunikation zwischen den OS Servern minimal ist. Die Server-Komponente "Service-Configuration" 22 kann auch als eigenständige Server-Komponente außerhalb des Webservers in die Architektur eines OS-Servers eingefügt sein, sollte aber über die Web-server der Operator Stations verfügbar sein. Sie umfasst erfindungsgemäß eine und dynamisch gepflegte Tabelle. Diese setzt sich aus "statischen" und "dynamischen" Einträgen zusammen. Statische Einträge werden beim Engineering des Automatisierungssystems festgelegt und als Konfigurationsdaten auf die OS Server geladen. Dynamische Einträge werden beobachtet und während des Betriebs des Automatisierungssystems geändert.

Zu den statischen Einträgen der erfindungsgemäßen "Service-Configuration"-Tabelle gehören:
- Security Area: Dahinter steht letztendlich, welche Teilanlage der gesamten technologischen Hierarchie unter diesen Eintrag fällt. Damit ist implizit auch erfasst, welche Zugriffsrechte benötigt werden, um die Teilanlage zu bedienen.
- Server Name / IP: Dieser Eintrag gibt an, welcher OS Server (Name und IP-Adresse) das Prozessabbild der jeweiligen Teilanlage für das Bedienen und Beobachten hält und pflegt. OSx/OSx* bedeutet, dass die jeweilige Teilanlage zwecks Hochverfügbarkeit redundant ausgelegt wurde.
- #POS: Dieser Eintrag gibt an, wie viele Prozessobjekte im Prozessabbild der jeweiligen Teilanlage enthalten sind. Diese Information ist quasi eine Art Komplexitätsindex für eine mögliche Kommunikationslast, die bei der Dynamisierung von Anlagenbildern und Hierarchien (Bildhierarchien und technologische Hierarchien) mit dieser jeweiligen Teilanlage entstehen können.

Zu den dynamischen Einträgen der erfindungsgemäßen "Service-Configuration"-Tabelle gehören:
- Health Index: Dies ist ein skalarer Wert im Intervall [1...5], der angibt, in welchem Zustand sich gegenwärtig der Operator Station Server befindet. Je höher der Wert ist, desto besser ist der Zustand des Servers (Zur Festlegung des so genannten Gesundheitszustands eines Servers werden Indikatoren wie die Speicherauslastung, CPU Auslastung, Temperatur der Komponenten und Aspekte der Hardware und Software in Nummern gefasst, aus denen wiederum ein repräsentativer skalarer Wert für den entsprechenden Server gebildet wird). Der Health Index spielt insbesondere bei redundant ausgelegten OS Servern eine Rolle und wird unter anderem für den aktiv/passiv Modus genutzt. Da sich der Health Index zur Laufzeit während des Betriebs ändern kann, wird dieser durch die jeweilige Bedienstation während des Betriebs des Automatisierungsservers in der Service-Configuration-Tabelle für alle OS Server aktualisiert.
- Operation Mode: Dieser Eintrag gibt bei redundant ausgelegten Operator Station Servern an, in welchem Modus sich der jeweilige Server (aktiv/passiv) gerade befindet.

Im Folgenden ist ein Ausführungsbeispiel für eine "Service-Configuration"-Tabelle dargestellt:

| Security Area | Server Name / IP | #POs | Health Index | Operation |
|---|---|---|---|---|
| Teilanlage 1 | OS1 / 192.178.169.1 | 2500 | 5 | a |
| Teilanlage 2 | OS2 / 192.178.169.2 | 1000 | 5 | a |
| Teilanlage 3 | OS2 / 192.178.169.2 | 2000 | 5 | a |
| Teilanlage 4 | OS3 / 192.178.169.3 | 1000 | 5 | a |
| Teilanlage 4 | OS3* / 192.178.169.4 | 1000 | 4 | p |

Die Server-Komponente Service-Configuration 22 pflegt die zuvor beschriebene Tabelle und stellt sie auf Anfrage dem OS Client zur Verfügung. In der Komponente Service-Configuration 22 sind mehrere Sub-Komponenten wie z.B. die Komponente "Status Update" 23 enthalten, um z.B. über die Verteilungsmechanismen innerhalb der Laufzeitumgebung den Health Index und den Operation Mode der benachbarten Operator Station Server zu evaluieren, um dann diese Einträge in der Tabelle während des Betriebs des Automatisierungssystems zu pflegen und zu aktualisieren.

Im Folgenden wird der Algorithmus zur Bestimmung eines Vorzugsservers mit optimierten Kommunikationseigenschaften anhand des folgenden Ausführungsbeispiels auf Grundlage der zuvor dargestellten Tabelle näher erläutert:
Bevor ein Operator eine Anlage bedienen und beobachten kann, muss er sich initial authentifizieren. Hierbei sind beim Einloggen am OS Client 10 für gewöhnlich ein Name und ein Passwort erforderlich. Nach einer erfolgreichen Authentifizierung findet der eigentliche Anmeldevorgang an einem der OS Server statt. Hierbei wird vom Webbrowser des OS Clients eine Verbindungsanfrage an den Webserver des OS Servers gestellt. Eine Erstverbindung zwischen Client und Server wird hergestellt. Der für diese erste Verbindung ausgewählte Server wird als erster Server bezeichnet. In diesem Ausführungsbeispiel ist der erste Server OS Server 1, 81.

Anschließend werden die Login-Informationen des aktuell am OS Client angemeldeten Operators z.B. an die AccessControl-Komponente 25 des OS-Servers übergeben und es erfolgt eine Überprüfung der Zugriffsrechte, der Rollen und des Anwenderprofils des Operators durch Auslesen der Access-Control-Komponente:
1. ReadAccessControl(Operator X)
   Ergebnis: Operator X: Rights for "Teilanlage 1", "Teilanlage 2", "Teilanlage 3"
   In den Zugriffsrechten wird unter anderem festgehalten, welche Anlagenbilder von dem angemeldeten Operator X angewählt werden dürfen und welche nicht. Auf den Befehl "ReadAccess-Control" ergibt sich als Ergebnis für den Operator X, dass er Zugriffsrechte für die Teilanlagen 1, 2 und 3 besitzt.
   In einem nächsten Schritt wird die Access-Control-Komponente 25 und die zuvor beschriebene Service-Configuration-Komponente 22 des ersten Servers 81 vom OS Server 81 in den Client 10 geladen. Anhand der oben beschriebenen Tabelle wird nun innerhalb des Clients ein Vorzugsserver bestimmt, indem eine Evaluierung der Server mittels der Service-Configuration-Komponente erfolgt.
2. EvaluateServiceConfigurationTable("Teilanlage 1", "Teilanlage 2", "Teilanlage 3")
   Ergebnis: OS1:POs=2500;0S2:POs=3000
   In diesem Ausführungsbeispiel bedeutet dies, dass bei der Evaluierung mittels der oben angegebenen Tabelle bestimmt wird, welche OS Server für die Teilanlagen 1, 2 und 3 verantwortlich sind, für die der Operator X Zugriffsrechte besitzt. Das Ergebnis kann anhand der oben angegebenen Tabelle abgelesen werden. Es handelt sich hierbei um OS Server 1 (OS1) und OS Server 2 (OS2). Danach wird bestimmt, wie viele Prozessobjekte auf den jeweiligen OS Servern für den Operator X auf Grund seiner Zugriffsrechte relevant sind: Bei OS Server 1 sind für "Teilanlage 1" 2500 Prozessobjekte relevant und bei OS Server 2 sind für die "Teilanlagen 1 und 2" insgesamt 3000 Prozessobjekte relevant.
   Anschließend werden die Zustände (hier "Health Index") der zuvor ermittelten Server mittels der Tabelle der clientseitigen Komponente "Service Configuration" überprüft:
3. CheckHealth (OS1, OS2)
   Ergebnis: OS1=5; OS2=5
   In diesem Ausführungsbeispiel besitzen beide Server einen optimalen Zustand, was durch den maximal möglichen HealthIndex gekennzeichnet ist. Eine Verbindung ist nur zu Operator Station Servern mit gutem Gesundheitszustand erlaubt.
   In einem letzten Schritt wird der Operator Station Vorzugsserver nach dem Kriterium der maximalen Anzahl der Prozessobjekte ausgewählt, um beim Bedienen und Beobachten die minimal mögliche Querkommunikation zwischen den Operator Station Servern zu erreichen.
4. ChooseMaxPOs (OS1, OS2)
   Ergebnis: OS2

Bereits in Schritt 2 wurde die Anzahl der Prozessobjekte pro Server für den Operator X mit seinen Zugriffsrechten bestimmt. Aufgrund der maximalen Anzahl von 3000 Prozessobjekten ist OS 2 hier der Vorzugsserver, mit dem das Kommunikationsaufkommen (insbesondere die Querkommunikation zwischen den Operator Station Servern) auf dem Terminalbus maßgeblich minimiert wird.

Nachdem der Vorzugsserver nun bestimmt ist, verbindet der Re-Director in der Service Configuration (Client) Komponente den Operator Station Client mit dem Operator Station Vorzugsserver. Danach beginnt das eigentliche Bedienen und Beobachten.

In Fig. 3 ist beispielhaft ein Sequenzdiagramm zum dynamischen und rechteorientierten Anmeldeprozess eines OS Clients an seinem kommunikationsminimalen OS Vorzugsserver dargestellt. Der OS Client gehört hier zu Teilanlage 2 (40). Durch die in Fig. 2 beschriebene Architektur kann bei der Erstverbindung durch den Operator Station Client jeder beliebige Operator Station Server (hier OS Server 1) gewählt werden. Es werden die Komponenten der Zugangsberechtigung (Access Control) und die Komponente "Service Configuration" am OS Server 1 ausgelesen (41) und in den OS Client geladen (42). Ist der Operator Station Vorzugsserver im Operator Station Client gemäß dem erfindungsgemäßen Verfahren bestimmt worden (43), stellt dieser entsprechend eine Verbindung zu diesem (hier OS Server 2) her (Redirect preferred Operator Station Server)(44). Danach beginnt das eigentliche Bedienen und Beobachten (45), wobei durch die beschriebene Maßnahme nun die Querkommunikation auf ein Minimum beschränkt wurde. Die meisten Daten, die der angemeldete Operator Station Client zur Dynamisierung der Anlagenbilder benötigt, bezieht dieser direkt vom verbundenen Vorzugsserver ohne Querverteilung zwischen den Operator Station Servern. Bei dem Vorzugsserver kann es sich durchaus auch um den OS Server der Erstverbindung handeln, wenn dieser nach Überprüfung der Kriterien des Zustands und der maximal vorhandenen Prozessobjekte als der optimale kommunikationsminimale OS Server ausfällt.

## Patentansprüche

1. Verfahren zum Betreiben eines Automatisierungssystems (2) zum Steuern eines Prozesses (P) in einer technischen Anlage (1), mit einem Bedien- und Beobachtungssystem (7), welches mindestens einem Client (10) und mindestens einen Server (81, 82, ... 8N) aufweist,
mit den Schritten:
- Herstellen einer ersten Verbindung zwischen einem Client (10) und einem ersten Server (81), indem für einen an dem Client (10) angemeldeten Operator bei dem ersten Server (81) eine Überprüfung der Zugriffsrechte des Operators durch Auslesen der Zugriffsrechte aus einer Access-Control-Komponente (25) erfolgt,
- Laden der Access-Control-Komponente (25) und einer Service-Configuration-Komponente (22) des ersten Servers (81) in den Client (10),
- Evaluierung der Server (81, 82, ... 8N) mittels der Service-Configuration-Komponente (22) auf der Basis der Zugriffsrechte des Operators und Bestimmung einer Anzahl von Prozessobjekten pro Server,
- Auswahl eines Vorzugsservers (82) nach einem Kriterium eines Zustands des ausgewählten Servers (82) und einem Kriterium einer auf dem Server (82) vorhandenen maximalen Anzahl von Prozessobjekten der technischen Anlage (1),
- Herstellen einer zweiten Verbindung des Clients (10) mit dem zuvor bestimmten und überprüften Vorzugsserver (82) zum anschließenden Bedienen und Beobachten des technischen Prozesses (P).

2. Verfahren nach Anspruch 1,
**dadurch gekennzeichnet,**
**dass** die Service-Configuration-Komponente (22) derart ausgestaltet ist, dass sie eine Tabelle mit statischen Einträgen wie Angaben über zu steuernde Teilanlagen der technischen Anlage (1) und Angaben über deren Prozessabbild auf den Servern (81, 82, ... 8N) und mit dynamischen Einträgen wie einem momentanen Zustand und/oder einer Betriebsart der Server (81, 82, ... 8N) umfasst.

3. Verfahren nach Anspruch 2,
**dadurch gekennzeichnet,**
**dass** die statischen Einträge der Tabelle während des Engineerings der Anlage festgelegt werden und die dynamischen Einträge während des Betriebs des Automatisierungssystems (2) verändert werden.

4. Verfahren nach Anspruch 3,
**dadurch gekennzeichnet,**
**dass** die dynamischen Einträge der Tabelle der Service-Configuration-Komponente (22) dynamisch zur Laufzeit des Automatisierungssystems (2) verändert werden.

5. Bedien- und Beobachtungssystem (7) für ein Automatisierungssystem (2), welches einen Prozess (P) in einer technischen Anlage (1) steuert,
mit mindestens einem Client (10) und mindestens einem Server (81, 82, ... 8N), welche über mindestens ein Kommunikationsmittel (11) miteinander verbunden sind,
**dadurch gekennzeichnet,**
**dass** jeder Server (81, 82, ... 8N) zumindest eine Service-Configuration-Komponente (22) enthält, die derart ausgestaltet ist, dass sie eine Tabelle mit statischen Einträgen wie Angaben über zu steuernde Teilanlagen der technischen Anlage (1) und Angaben über deren Prozessabbild auf den Servern (81, 82, ... 8N) und mit dynamischen Einträgen wie einem momentanen Zustand und/oder einer Betriebsart der Server (81, 82, ... 8N) umfasst und
**dass** jeder Client derart ausgestaltet ist, dass auf Anfrage eines Operators zumindest Teile der Service-Configuration-Komponente (22) in den Client (10) ladbar sind, um die Schritte gemäß einem der Ansprüche 1 bis 4 durchzuführen.

6. Bedien- und Beobachtungssystem (7) nach Anspruch 5,
**dadurch gekennzeichnet,**
**dass** der Client (10) als weborientierter Zero Installation Client ausgebildet ist, der unabhängig von der Hardwarekonfiguration des Automatisierungssystems (2) Verbindungen zwischen einem Webbrowser des Clients (10) und einem Web-server eines Servers (81, 82, ... 8N) herstellt.

7. Automatisierungssystem (2) zur Steuerung eines Prozesses (P) in einer technischen Anlage (1)
welches ein Bedien- und Beobachtungssystem (7) gemäß einem der Ansprüche 5 oder 6 aufweist.
